Europäisches Patentamt

European Patent Office

Office européen des brevets

(11) Numéro de publication : **0 092 138**
**B1**

# FASCICULE DE BREVET EUROPÉEN

(45) Date de publication du fascicule du brevet :
**20.08.86**

(21) Numéro de dépôt : **83103512.6**

(22) Date de dépôt : **12.04.83**

(51) Int. Cl.⁴ : **H 02 K   5/132**, H 02 K 15/00

(54) **Dispositif d'accouplement de deux éléments, en particulier de deux moteurs électriques.**

(30) Priorité : **15.04.82 FR 8206487**

(43) Date de publication de la demande :
**26.10.83 Bulletin 83/43**

(45) Mention de la délivrance du brevet :
**20.08.86 Bulletin 86/34**

(84) Etats contractants désignés :
**AT DE FR GB IT SE**

(56) Documents cités :
**FR-A- 1 417 976**
**US-A- 2 098 958**

(73) Titulaire : **ALSTHOM**
**38, avenue Kléber**
**F-75784 Paris Cedex 16 (FR)**

(72) Inventeur : **Romand-Monnier**
**11, rue Louis Rousseau**
**F-39000 Lons Le Saunier (FR)**
Inventeur : **Lejeune, Jean-Pierre**
**26, rue des Fréres Berger**
**F-90500 Beaucourt (FR)**

(74) Mandataire : **Weinmiller, Jürgen et al**
**Zeppelinstrasse 63**
**D-8000 München 80 (DE)**

## Description

La présente invention concerne un dispositif d'accouplement de deux éléments comportant chacun une carcasse fixe et un arbre coaxial mobile en rotation.

L'invention s'applique en particulier, mais non limitativement, à l'accouplement vertical de deux moteurs lourds et de grande longueur. C'est le cas dans les groupes motopompes destinés au pompage dans des puits, de pétrole par exemple. Dans un tel cas, généralement trois moteurs sont accouplés les uns à la suite des autres. L'accouplement des carcasses est alors réalisé par brides boulonnées et celui des arbres par manchons cannelés. La liaison électrique est assurée par des connecteurs à broches et douilles supportées par des pièces isolantes. La cinématique de l'accouplement est la suivante : contact entre arbres et manchons, contact des connecteurs électriques et enfin contact des carcasses.

Cette cinématique implique l'utilisation de systèmes annexes, amovibles, permettant le positionnement angulaire et axial relatif des deux moteurs à accoupler.

Dans ce mode opératoire, les pièces fragiles c'est-à-dire les arbres cannelés et les connecteurs électriques sont accouplés les premiers ; il y a donc un risque de détérioration en cas de mauvaise manœuvre ou de mauvais alignement et d'autre part la manœuvre est dangereuse car l'opérateur doit intervenir au cours de la descente du moteur supérieur vers le moteur inférieur pour orienter convenablement les arbres, une fausse manœuvre du grutier étant alors fatale pour les mains de l'opérateur.

On connaît par le document US-A-2 098 958 un dispositif d'accouplement de deux moteurs électriques verticaux cependant l'accouplement commence par les arbres d'une part, et en outre il est nécessaire d'orienter les arbres l'un par rapport à l'autre à la main car il n'existe aucun système d'indexation et de blocage des arbres par rapport aux carcasses.

La présente invention a pour but de pallier ces inconvénients et a pour objet un dispositif d'accouplement de deux éléments comportant chacun une carcasse fixe et un arbre coaxial mobile en rotation, l'extrémité d'arbre de chaque élément portant des cannelures et leur accouplement étant réalisé par un manchon portant des cannelures intérieures, l'immobilisation des carcasses en position accouplée étant réalisée par un écrou d'accouplement vissé sur la carcasse du premier élément, caractérisé en ce que l'extrémité de la carcasse du deuxième élément comporte une portée cylindrique externe mâle d'accouplement terminée par un épaulement de butée, l'extrémité de la carcasse du premier élément comportant un alésage correspondant d'accouplement femelle, en ce que l'extrémité d'arbre de chaque élément est en retrait par rapport à l'extrémité de sa carcasse, en ce qu'il comporte pour chaque élément, un moyen de positionnement et de blocage relatif de son arbre par rapport à sa carcasse au moment de l'accouplement, des moyens permettant de libérer les arbres en rotation vers la fin de la procédure d'accouplement, et des moyens de positionnement angulaire relatif des carcasses des deux éléments, le déplacement axial dudit écrou d'accouplement étant limité par une butée portée par la carcasse du deuxième élément.

Selon une réalisation préférentielle de l'invention un dit moyen de positionnement et de blocage d'un arbre par rapport à sa carcasse comprend une came mobile en rotation autour d'un axe perpendiculaire à l'axe des arbres et fixe par rapport à la carcasse, ladite came étant sollicitée en rotation autour de son axe par un ressort et sa rotation étant limitée par une butée, et au moins une rainure destinée à coopérer avec ladite came, ladite rainure étant liée à l'arbre.

Selon une disposition particulière, ladite rainure est constituée, pour l'arbre dudit deuxième élément, par une quelconque cannelure de l'extrémité de l'arbre et en ce que ladite rainure est constituée, pour l'arbre dudit premier élément, par une rainure axiale réalisée sur le diamètre extérieur dudit manchon d'accouplement des arbres, au moins dans la partie du manchon venant coiffer l'extrémité de l'arbre dudit premier élément.

Les moyens permettant de libérer les arbres en rotation sont constitués par des pièces qui, en fin d'accouplement, viennent prendre appui contre lesdites cames et les faire basculer en sens inverse de la sollicitation de leur ressort respectif.

Selon une réalisation, au moins une broche mâle de connecteur électrique est portée par la carcasse de l'un des éléments dont l'autre élément porte au moins une douille correspondante, la position axiale, dans chaque élément, de ladite douille et de ladite broche étant telle que leur pénétration mutuelle ne commence qu'après le commencement de l'accouplement des arbres.

Les moyens de positionnement angulaire relatif des carcasses comportent au moins une clavette et une rainure correspondante.

Ainsi, grâce à l'invention, qui permet d'indexer les arbres par rapport aux carcasses, il suffit d'orienter correctement entre elles les carcasses pour que les cannelures des deux arbres correspondent et éventuellement les connecteurs électriques dans le cas d'accouplement de moteurs électriques. On réalise ainsi, facilement, en aveugle l'accouplement des arbres disposés en retrait par rapport aux carcasses, et le cas échéant des connecteurs, sans crainte de les détériorer puisque le premier contact est celui des carcasses et que la seule orientation à réaliser est celle des carcasses ce qui assure le minimum de risque pour l'opérateur. Un autre avantage de l'invention réside dans l'absence de petites pièces indépendantes tels que boulons. En effet, la seule pièce indépendante des éléments à accoupler et à positionner sur place au moment de l'accouplement consiste dans le manchon d'accouplement des arbres.

L'invention sera bien comprise à la lumière de la description d'un exemple de réalisation de l'invention faite ci-après en regard du dessin annexé dans lequel :

La figure 1 représente en coupe axiale une vue partielle de deux moteurs électriques accouplés montrant le dispositif d'accouplement selon l'invention. Sur cette figure, on voit l'extrémité supérieure d'un premier moteur et l'extrémité inférieure d'un deuxième moteur.

La figure 2 montre en coupe selon II-II de la figure 3 l'extrémité supérieure du premier moteur non accouplé.

La figure 3 est une vue selon G de la figure 2.

La figure 4 est une vue selon F de la figure 1, le premier moteur étant désaccouplé.

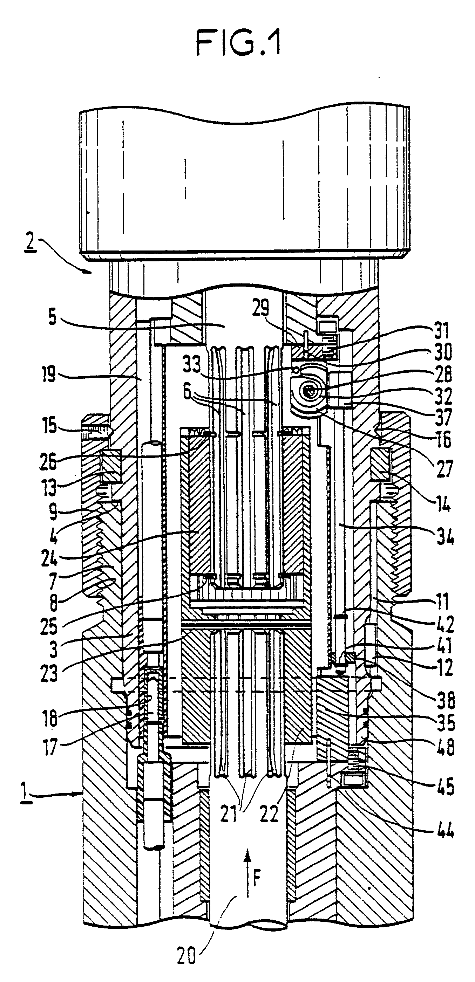

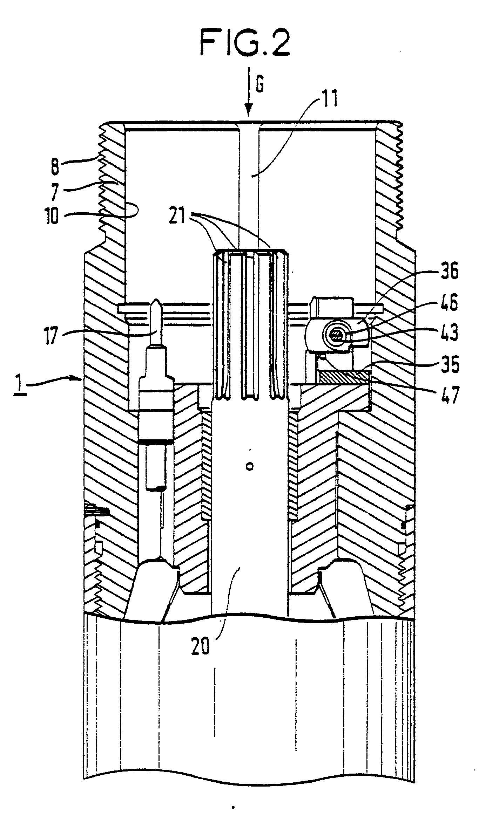

En se reportant à la figure 1, on voit donc deux extrémités de deux moteurs électriques accouplés : un moteur inférieur 1 et un moteur supérieur 2. Cette figure ne montre qu'une petite partie des moteurs, essentiellement leur accouplement dans lequel on voit l'extrémité supérieure du moteur inférieur 1 et l'extrémité inférieure du moteur supérieur 2. La figure 2 montre l'extrémité supérieure du moteur inférieur 1 avant l'accouplement qui est d'ailleurs identique à l'extrémité supérieure du moteur supérieur. Les deux moteurs sont identiques.

Dans la suite du texte on appellera carcasse la partie fixe externe des moteurs, que cette partie ait une fonction de palier ou une autre fonction et bien que cette carcasse soit constituée de plusieurs pièces liées les unes aux autres. Et par ailleurs, ce qui est dit d'une extrémité d'un moteur est vrai aussi pour l'extrémité équivalente de l'autre.

Donc, l'extrémité inférieure de la carcasse du moteur 2 comporte une portée cylindrique externe mâle 3 d'accouplement terminée par un épaulement 4. Cette portée est coaxiale à l'arbre 5 dont l'extrémité inférieure porte des cannalures 6. Comme on le voit, l'extrémité de l'arbre est nettement en retrait par rapport à l'extrémité de la carcasse.

L'extrémité supérieure de la carcasse du moteur 1 se termine par une portée cylindrique 7 portant extérieurement un filetage 8 pour recevoir un écrou d'accouplement 9 porté par l'extrémité inférieure du moteur 2, et percée d'un alésage 10 d'accouplement femelle correspondant au diamètre extérieur de la portée mâle 3. Un certain nombre de rainures telles que celle 11 représentée figure 2 sont usinées dans l'alésage 10 pour coopérer avec des clavettes telles que 12 figure 1 portées par la portée mâle 3 de manière à positionner angulairement les carcasses des moteurs 1 et 2. Lors du vissage de l'écrou d'accouplement 9 des carcasses, le déplacement axial de l'écrou est limité par une butée 13 constituée de deux demi-coquilles placées dans une gorge 14 au delà de l'épaulement 4 de la portée mâle 3. L'écrou 9 est bloqué en rotation par une vis à bout pointu 15 pénétrant dans une gorge à section triangulaire 16.

Trois broches mâles telles que celle représentée 17 sont reliées au bobinage statorique du moteur 1 et fixées à l'extrémité supérieure de la carcasse du moteur 1 dans l'alésage 10 et trois douilles correspondante telles que celle représentée 18 sont reliées au bobinage statorique du moteur supérieur 2 et fixées à l'extrémité inférieur de la carcasse du moteur 2 dans l'alésage 19 de la carcasse. Ces broches et ces douilles permettent de réaliser la connexion électrique des stators des deux moteurs.

Le moteur inférieur 1 comporte un arbre 20, identique à l'arbre 5 du moteur 2 puisque les moteurs sont identiques, et son extrémité supérieure porte des cannelures 21. Cette extrémité d'arbre est également nettement en retrait par rapport à l'extrémité de la carcasse.

L'accouplement des arbres est réalisé à l'aide d'un manchon d'accouplement 22 comportant des cannelures intérieures, il est placé en butée contre l'extrémité de l'arbre 20 grâce à une goupille de butée 23.

Un manchon intermédiaire 24 cannelé, intérieurement et extérieurement, est monté sur les cannelures 6 de l'arbre 5 et arrêté axialement au moyen de deux circlips 25 et 26. C'est sur ce manchon intermédiaire 24 que le manchon d'accouplement 22 vient s'emboîter. L'utilité du manchon intermédiaire 24 consiste à réduire la pression de contact en augmentant le diamètre de l'arbre 5 et lui permettre un libre glissement dans le manchon d'accouplement 22 lors des dilatations et rétractations de l'arbre 5.

Afin de pouvoir réaliser l'accouplement des arbres qui se fait en aveugle, les carcasses pénétrant l'une dans l'autre avant le commencement de l'accouplement des arbres, on a prévu un dispositif permettant d'indexer les arbres par rapport aux carcasses.

A cet effet, une came 27 est supportée par un axe 28 monté dans une chape 29 positionnée dans la carcasse du moteur 2 à son extrémité inférieure par un pion 30 et fixé par une vis 31. La came 27 est maintenue avant l'accouplement dans une cannelure de l'arbre 5 grâce à un ressort spiral 32 et une butée 33. Lors de l'accouplement, une tige 34 prend appui sur une chape 35, destinée à supporter une came 36, (figure 2) de l'extrémité supérieure du moteur 1 pour l'indexation de l'arbre 20 par rapport à la carcasse du moteur 1.

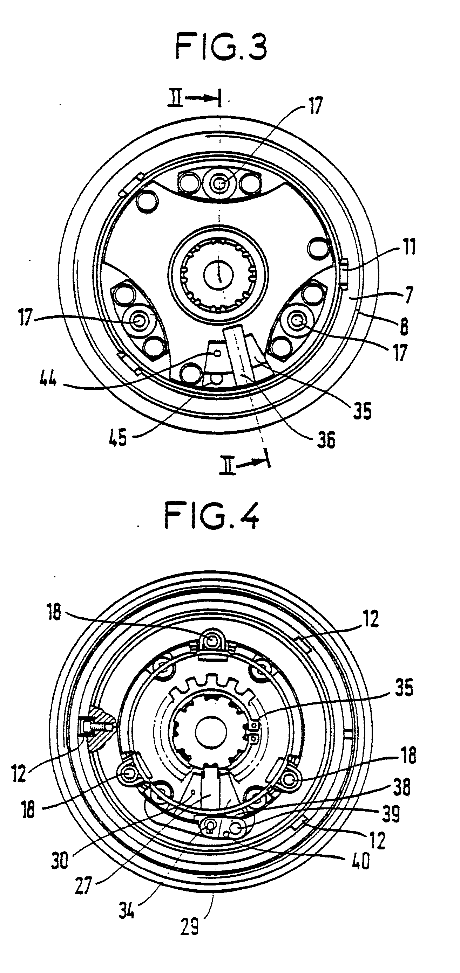

La tige 34 est solidaire d'un bloc 37 qui prend appui contre la came 27 et la fait basculer libérant l'arbre 5. La tige 34 est guidée transversalement par une pièce 38 fixée et positionnée par une vis 39 et un pion 40 (figure 4). Deux circlips 41 et 42 limitent la course de la tige 34.

Les cames 27 et 36 respectivement situées à l'extrémité inférieure et supérieure d'un moteur sont décalées angulairement de 15°. C'est pourquoi sur la figure 1 on ne voit pas la came 36 visible seulement sur la figure 2 qui est une coupe selon II-II de la figure 3.

La came 36 à l'extrémité supérieure du moteur 2 pivote autour d'un axe 43 monté dans la chape 35. La chape 35 est positionnée par un pion 44 et fixée par une vis 45.

Avant l'accouplement, la came est maintenue dans une rainure du manchon d'accouplement 22 des arbres, par un ressort spiral 46 et une butée 47.

Lors de l'accouplement des moteurs, l'extrémité 48 de la portée mâle 3 du moteur 2 vient buter contre la came 36 et la faire basculer libérant ainsi l'arbre 20 en rotation.

A l'état initial, le moteur inférieur 1 est placé dans un puits et soutenu par un dispositif de manutention fixé à l'extrémité supérieure du moteur.

Le moteur 2 est suspendu à un moyen de levage. On place un manchon 22 en bout d'arbre du moteur inférieur 1 et on fait tourner l'arbre de ce moteur de façon à ce que la came 36 poussée par son ressort 46 pénètre dans la rainure, non visible sur les figures, du manchon d'accouplement 22.

On vérifie que la came 27 du moteur supérieur 2 est engagée dans une cannelure de l'arbre 5 et sinon on tourne l'arbre de façon à ce que cette came pénètre dans une cannelure.

On amène le moteur supérieur dans l'axe du moteur inférieur et on fait descendre le moteur supérieur jusqu'à ce que les extrémités des carcasses soient à environ 1 cm. On oriente alors le moteur supérieur de manière à aligner clavettes et rainures de clavettes des carcasses et on poursuit la descente jusqu'en butée contre l'épaulement 4 de la portée mâle 3. On visse alors l'écrou d'accouplement 9 et on l'arrête en rotation en serrant la vis 15.

La cinématique de l'accouplement est la suivante : La portée mâle 3 du moteur supérieur pénètre dans l'alésage 10 du moteur inférieur 2. La pénétration des clavettes 12 dans leurs logements, après 30 mm de course environ, entraîne le positionnement angulaire des deux moteurs. A partir de ce moment les cannelures portées par les manchons 22 et 24 sont alignées du fait de l'indexation des arbres par rapport aux paliers. Vient alors la pénétration du manchon intermédiaire 24 dans le manchon d'accouplement 22, après 40 mm de course environ, réalisant l'accouplement des arbres, et enfin, après environ 80 mm de course, la connexion électrique, et simultanément, l'effacement des cames 27 et 36.

## Revendications

1. Dispositif d'accouplement de deux éléments (1, 2) comportant chacun une carcasse fixe et un arbre coaxial (5, 20) mobile en rotation, l'extrémité d'arbre de chaque élément portant des cannelures (6, 21) et leur accouplement étant réalisé par un manchon (22) portant des cannelures intérieures, l'immobilisation des carcasses en position accouplée étant réalisée par un écrou d'accouplement (9) vissé sur la carcasse du premier élément, caractérisé en ce que l'extrémité de la carcasse du deuxième élément (2) comporte une portée cylindrique externe mâle (3) d'accouplement terminée par un épaulement de butée (4), l'extrémité de la carcasse du premier élément (1) comportant un alésage (10) correspondant d'accouplement femelle, en ce que l'extrémité d'arbre de chaque élément est en retrait par rapport à l'extrémité de sa carcasse, en ce qu'il comporte pour chaque élément, un moyen de positionnement et de blocage relatif de son arbre par rapport à sa carcasse au moment de l'accouplement, des moyens permettant de libérer les arbres en rotation vers la fin de la procédure d'accouplement, et des moyens (12) de positionnement angulaire relatif des carcasses des deux éléments, le déplacement axial dudit écrou d'accouplement (9) étant limité par une butée (13) portée par la carcasse du deuxième élément (2).

2. Dispositif d'accouplement selon la revendication 1, caractérisé en ce qu'un dit moyen de positionnement et de blocage d'un arbre par rapport à sa carcasse comprend une came (27, 36) mobile en rotation autour d'un axe perpendiculaire à l'axe des arbres et fixe par rapport à la carcasse, ladite came étant sollicitée en rotation autour de son axe par un ressort (32, 46) et sa rotation étant limitée par une butée (33, 47), et au moins une rainure destinée à coopérer avec ladite came, ladite rainure étant liée à l'arbre.

3. Dispositif d'accouplement selon la revendication 2, caractérisé en ce que ladite rainure est constituée, pour l'arbre (5) dudit deuxième élément (2), par une quelconque cannelure (6) de l'extrémité de l'arbre (5) et en ce que ladite rainure est constituée, pour l'arbre (20) dudit premier élément (1), par une rainure axiale réalisée sur le diamètre extérieur dudit manchon (22) d'accouplement des arbres au moins dans la partie du manchon venant coiffer l'extrémité de l'arbre dudit premier élément.

4. Dispositif d'accouplement selon la revendication 3, caractérisé en ce que les moyens permettant de libérer les arbres en rotation sont constitués par des pièces (37, 48) qui, en fin d'accouplement, viennent prendre appui contre lesdites cames et les faire basculer en sens inverse de la sollicitation de leur ressort respectif.

5. Dispositif d'accouplement selon l'une des revendications 1 à 4, caractérisé en ce que au moins une broche mâle (17) de connecteur électrique est portée par la carcasse de l'un des éléments et en ce que l'autre élément porte au moins une douille (18) correspondante, la position axiale, dans chaque élément, de ladite douille et de ladite broche étant telle que leur pénétration mutuelle ne commence qu'après le commencement de l'accouplement des arbres.

6. Dispositif d'accouplement selon l'une des revendications précédentes caractérisé en ce que les moyens de positionnement angulaire relatif des carcasses comportent au moins une clavette (12) et une rainure (11) correspondante.

**Claims**

1. A device for coupling two elements, each having a stationary body and a coaxial rotatable shaft (5, 20), the end of the shaft of each element bearing splines (6, 21) and their coupling being ensured by a sleeve (22) bearing splines at the inside, the bodies being immobilized in the coupled position by a coupling nut (9) screwed onto the body of the first element, characterized in that the end of the body of the second element (2) comprises a cylindrical outer male coupling bearing portion ending in a stop shoulder (4), the end of the body of the first element (1) comprising a corresponding female coupling boring, that the end of the shaft of each element is recessed with respect to the end of its body, that it comprises for each element a means for positioning and relative blocking of its shaft with respect to its body at the coupling instant, means allowing the shafts to be released rotatably at the end of the coupling process and means (12) ensuring a relative angular positioning of the bodies of the two elements, the axial movement of the coupling nut (9) being limited by a stop (13) on the body of the second element (2).

2. A coupling device according to claim 1, characterized in that said means for positioning and blocking a shaft with respect to its body comprises a cam (27, 36) rotatable about an axis which is perpendicular to the axis of the shaft and stationary with respect to the body, said cam being urged by a spring (32, 46) to rotate about its axis and its rotation being limited by a stop (33, 47), and comprises at least one groove intended to cooperate with said cam, said groove being connected to the shaft.

3. A coupling device according to claim 2, characterized in that said groove is constituted, for the shaft (5) of said second element (2), by any spline (6) located at the end of the shaft (5), and that said groove is constituted, for the shaft (20) of said first element (1), by an axial groove realized on the outer diameter of the shaft coupling sleeve (22) at least in the region of the sleeve which covers the end of the shaft of said first element.

4. A coupling device according to claim 3, characterized in that the means which allow the shaft to be released for rotation are constituted by parts (37, 48) which, at the end of the coupling operation, bear against said cams and make them tilt in a direction opposite to the respective spring load.

5. A coupling device according to one of claims 1 to 4, characterized in that at least one male pin (17) of an electrical connector is fitted to the body of one of the elements and that the other element bears at least one corresponding socket (18), the axial position of said socket and of said pin on each element being chosen in such a way that their mutual penetration only starts after the coupling of the shafts has begun.

6. A coupling device according to one of the preceding claims, characterized in that the means allowing the bodies to be relatively angularly positioned comprise at least one wedge (12) and a corresponding groove (11).

**Patentansprüche**

1. Vorrichtung zum Koppeln von zwei Elementen (1, 2) mit je einer drehfesten Karkasse und einer dazu koaxialen drehbaren Welle (5, 20), wobei das Wellenende jedes Elements Rillen (6, 21) aufweist und ihr Koppeln über eine Manschette (22) erfolgt, die Innenrillen aufweist, und wobei die Festlegung der Karkassen in gekoppelter Stellung über eine Koppelmutter (9) erfolgt, die auf die Karkasse des ersten Elements aufgeschraubt wird, dadurch gekennzeichnet, daß das Ende der Karkasse des zweiten Elements (2) einen nach außen weisenden zylindrischen Koppelbereich (3) besitzt, der in einer Anschlagschulter (4) endet, während das Ende der Karkasse des ersten Elements (1) einen entsprechenden hohlen Koppelbereich (10) aufweist, daß das Wellenende jedes Elements bezüglich des Endes seiner Karkasse zurückversetzt ist, daß für jedes Element ein Mittel zur relativen Positionierung und Blockierung der Welle bezüglich der Karkasse während des Ankoppelns, Mittel zur Drehfreigabe der Wellen am Ende der Koppelprozedur und Mittel (12) vorgesehen sind, mit denen die Karkassen der beiden Elemente winkelmäßig gegeneinander positioniert werden können, wobei die Axialverschiebung der Koppelmutter (9) durch einen Anschlag (13) begrenzt ist, der auf der Karkasse des zweiten Elements (2) sitzt.

2. Koppelvorrichtung nach Anspruch 1, dadurch gekennzeichnet, daß das Mittel zur Positionierung und Blockierung einer Welle bezüglich ihrer Karkasse eine Nocke (27, 36) aufweist, die um eine zur Wellenachse senkrechte und bezüglich der Karkasse feste Achse in Drehrichtung beweglich ist und um ihre Achse durch eine Feder (32, 46) in Drehung versetzt wird, wobei diese Drehung durch einen Anschlag (33, 47) begrenzt ist, und daß die Karkasse außerdem mindestens eine Rinne aufweist, die mit der Nocke zusammenwirken soll und mit der Welle verbunden ist.

3. Koppelvorrichtung nach Anspruch 2, dadurch gekennzeichnet, daß die Rinne für die Welle (5) des zweiten Elements (2) von einer beliebigen Rille (6) des Wellenendes (5) gebildet wird und daß die Rinne für die Welle (20) des ersten Elements (1) von einer axialen Rinne gebildet wird, die auf dem äußeren Durchmesser der Koppelmanschette (22) der Wellen zumindest in dem Bereich der Manschette angebracht ist, der das Wellenende des ersten Elements überstreicht.

4. Koppelvorrichtung nach Anspruch 3, dadurch gekennzeichnet, daß die Mittel, die die Wellen drehmäßig freigeben sollen, von Bauteilen (37, 48) gebildet werden, die sich am Ende des Koppelvorgangs auf die Nocken auflegen und sie entgegen ihrer jeweiligen Federkraft kippen lassen.

5. Koppelvorrichtung nach einem der Ansprüche 1 bis 4, dadurch gekennzeichnet, daß auf der Karkasse eines der Elemente mindestens ein elektrischer Stecker (17) angeordnet ist und daß das andere Element mindestens eine entsprechende Buchse (18) trägt, wobei die axiale Stellung der Buchse und des Steckers in jedem Element so gewählt ist, daß ihr gegenseitiges Eindringen erst mit dem Beginn des Koppelns der Wellen einsetzt.

6. Koppelvorrichtung nach einem der vorhergehenden Ansprüche, dadurch gekennzeichnet, daß die Mittel zur relativen winkelmäßigen Positionierung der Karkassen mindestens einen Index-Pflock (12) und eine entsprechende Rille (11) aufweisen.

# FIG.1

# FIG.2

# FIG.3

# FIG.4